# EUROPEAN PATENT APPLICATION

(11) **EP 4 481 006 A1**
(43) Date of publication of application: **25.12.2024**
(21) Application number: 24176427.3
(22) Date of filing: 16.05.2024
(51) Int. Cl.: C09D 11/101, C09D 11/38, C09D 11/322

(54) **ACTIVE ENERGY RAY-CURABLE INK JET INK, IMAGE RECORDING METHOD, AND MANUFACTURING METHOD OF MOLDED BODY**

(30) Priority: 19.06.2023 JP 2023100362
(71) Applicant: FUJIFILM Corporation, Tokyo 106-8620 (JP)
(72) Inventor: UMEBAYASHI, Tsutomu, c/o FUJIFILM Corporation, 577, Ushijima, Kaisei-machi, Ashigarakami-gun, Kanagawa, 258-8577 (JP); ISHIZAKA, Soji, c/o FUJIFILM Corporation, 577, Ushijima, Kaisei-machi, Ashigarakami-gun, Kanagawa, 258-8577 (JP)
(74) Representative: HGF

(57) **Abstract**

Provided are an active energy ray-curable inkjet ink, with which it is possible to obtain an image recorded material having excellent impact resistance and blocking resistance, the active energy ray-curable ink jet ink containing a difunctional (meth)acrylate having a linear or branched alkylene group having 5 to 9 carbon atoms, benzyl (meth)acrylate, and a colorant, in which the total content of the difunctional (meth)acrylate and the benzyl (meth)acrylate is 60% by mass or more with respect to the total amount of the active energy ray-curable ink jet ink; and applications thereof.

## Description

### BACKGROUND OF THE INVENTION

### 1. Field of the Invention

The present disclosure relates to an active energy ray-curable ink jet ink, an image recording method, and a manufacturing method of a molded body.

### 2. Description of the Related Art

In the related art, a method of curing ink with an active energy ray in a case where an image is recorded on a substrate using the ink has been known.

For example, JP2018-1676A discloses an ink for forming an image, containing a photopolymerizable monomer and a photopolymerization initiator. JP2017-25124A discloses an active energy ray-curable ink jet ink containing a polymerizable compound.

### SUMMARY OF THE INVENTION

In an image recorded material obtained by applying an ink onto a substrate, there may be a case in which it is required that the image recorded material has excellent impact resistance and blocking resistance.

The present disclosure has been made in view of such circumstances, and an object to be achieved by one embodiment of the present invention is to provide an active energy ray-curable inkjet ink, with which it is possible to obtain an image recorded material having excellent impact resistance and blocking resistance.

Another object to be achieved by one embodiment of the present invention is to provide an image recording method using the active energy ray-curable inkjet ink, and a manufacturing method of a molded body.

The present disclosure includes the following aspects.
<1> An active energy ray-curable inkjet ink comprising:
   a difunctional (meth)acrylate having a linear or branched alkylene group having 5 to 9 carbon atoms;
   benzyl (meth)acrylate; and
   a colorant,
   in which a total content of the difunctional (meth)acrylate and the benzyl (meth)acrylate is 60% by mass or more with respect to a total amount of the active energy ray-curable ink jet ink.
<2> The active energy ray-curable ink jet ink according to <1>,
   in which the total content of the difunctional (meth)acrylate and the benzyl (meth)acrylate is 95% by mass or more with respect to a total amount of polymerizable compounds.
<3> The active energy ray-curable ink jet ink according to <1> or <2>,
   in which a mass ratio of a content of the benzyl (meth)acrylate to a content of the difunctional (meth)acrylate is 2.0 to 5.0.
<4> The active energy ray-curable inkjet ink according to any one of <1> to <3>,
   in which a content of the benzyl (meth)acrylate is 50% by mass or more with respect to the total amount of the active energy ray-curable ink jet ink.
<5> The active energy ray-curable ink jet ink according to any one of <1> to <4>,
   in which a surface tension is 23 mN/m to 26 mN/m.
<6> The active energy ray-curable ink jet ink according to any one of <1> to <5>, further comprising:
   a silicone-based surfactant.
<7> The active energy ray-curable ink jet ink according to <6>,
   in which the silicone-based surfactant contains a polyether structure and a polysiloxane structure, and
   a mass ratio of a content of the polysiloxane structure to a content of the polyether structure is 0.6 or less.
<8> An image recording method comprising:
   a step of applying the active energy ray-curable inkjet ink according to any one of <1> to <7> onto a substrate by an inkjet recording method; and
   a step of irradiating the applied active energy ray-curable ink jet ink with an active energy ray to record an image.
<9> A manufacturing method of a molded body, comprising:
   a step of applying the active energy ray-curable inkjet ink according to any one of <1> to <7> onto a substrate by an inkjet recording method;
   a step of irradiating the applied active energy ray-curable ink jet ink with an active energy ray to record an image; and
   a step of molding the substrate on which the image has been recorded to manufacture a molded body.

According to the aspect of the present invention, there is provided an active energy ray-curable ink jet ink, with which it is possible to obtain an image recorded material having excellent impact resistance and blocking resistance.

According to another embodiment of the present invention, there are provided an image recording method using the active energy ray-curable ink jet ink, and a manufacturing method of a molded body.

### DESCRIPTION OF THE PREFERRED EMBODIMENTS

Hereinafter, the active energy ray-curable ink jet ink and the manufacturing method of a molded body according to the present disclosure will be described in detail.

In the present specification, the numerical ranges shown using "to" means ranges including the numerical values described before and after "to" as the minimum value and the maximum value.

In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.

In the present specification, in a case where a plurality of substances corresponding to each component in a composition is present, the amount of each component in the composition means the total amount of the plurality of substances present in the composition, unless otherwise specified.

In the present specification, a combination of two or more preferred aspects is a more preferred aspect.

In the present specification, the meaning of the term "step" includes not only an independent step but also a step whose intended purpose is achieved even in a case where the step is not clearly distinguished from other steps.

In the present specification, the term "image" denotes an entire film formed by applying an ink, and the term "image recording" denotes formation of an image (that is, the film).

In addition, the concept of "image" in the present specification also includes a solid image.

In the present specification, "(meth)acrylate" is a concept including both acrylate and methacrylate. In addition, "(meth)acryl" is a concept that includes both acryl and methacryl.

The active energy ray-curable ink jet ink (hereinafter, also simply referred to as "ink") according to one embodiment of the present disclosure contains a difunctional (meth)acrylate having a linear or branched alkylene group having 5 to 9 carbon atoms, benzyl (meth)acrylate, and a colorant, in which a total content of the difunctional (meth)acrylate and the benzyl (meth)acrylate is 60% by mass or more with respect to a total amount of the ink.

By applying the ink according to the embodiment of the present disclosure, for example, onto a substrate and then irradiating the ink with an active energy ray, an image recorded material in which an ink film is formed as an image on the substrate can be obtained. Since the ink according to the embodiment of the present disclosure contains the difunctional (meth)acrylate having a linear or branched alkylene group having 5 to 9 carbon atoms and the benzyl (meth)acrylate, a polymerization reaction proceeds by irradiation with active energy ray. The benzyl (meth)acrylate and the above-described difunctional (meth)acrylate contribute to achieving both impact resistance and blocking resistance, and in particular, since the total content of the above-described difunctional (meth)acrylate and the benzyl (meth)acrylate is 60% by mass or more with respect to the total amount of the ink, it is considered that the impact resistance and the blocking resistance are excellent.

On the other hand, in JP2018-1676A and JP2017-25124A, it is not assumed that the above-described difunctional (meth)acrylate and the benzyl (meth)acrylate are contained, and the total content thereof is 60% by mass or more with respect to the total amount of the ink.

Hereinafter, each component contained in the ink according to the embodiment of the present disclosure will be described.

### Active energy ray-curable inkjet ink

The ink according to the embodiment of the present disclosure is an active energy ray-curable ink. That is, the ink according to the embodiment of the present disclosure is cured by irradiation with an active energy ray. Examples of the active energy ray include γ-rays, β-rays, electron beams, ultraviolet rays, and visible rays. Among these, ultraviolet rays are preferable as the active energy ray. It is preferable that the ink according to the embodiment of the present disclosure is an ultraviolet-curable ink.

Difunctional (meth)acrylate having linear or branched alkylene group having 5 to 9 carbon atoms

The ink according to the embodiment of the present disclosure contains a difunctional (meth)acrylate having a linear or branched alkylene group having 5 to 9 carbon atoms (hereinafter, also referred to as "specific difunctional (meth)acrylate").

The difunctional (meth)acrylate means a compound having two (meth)acryloyloxy groups.

The specific difunctional (meth)acrylate has a linear or branched alkylene group, and since the linear or branched alkylene group has 5 to 9 carbon atoms, the blocking resistance of an image to be obtained is excellent.

From the same viewpoint, the number of carbon atoms in the linear or branched alkylene group is preferably 6 to 8 and more preferably 6.

The ink may contain only one kind of the specific difunctional (meth)acrylate, or two or more kinds thereof.

Examples of the specific difunctional (meth)acrylate include 3-methyl-1,5-pentanediol di(meth)acrylate, neopentyl glycol di(meth)acrylate, 1,6-hexanediol diacrylate, 1,7-heptanediol diacrylate, 1,8-octanediol diacrylate, and 1,9-nonanediol di(meth)acrylate.

Among these, from the viewpoint of jettability, the specific difunctional (meth)acrylate is preferably at least one selected from the group consisting of 3-methyl-1,5-pentanediol di(meth)acrylate and 1,6-hexanediol diacrylate; and is more preferably 3-methyl-1,5-pentanediol di(meth)acrylate.

From the viewpoint of blocking resistance, a content of the specific difunctional (meth)acrylate is preferably 15% by mass to 40% by mass and more preferably 17% by mass to 25% by mass with respect to the total amount of the ink.

### Benzyl (meth)acrylate

The ink according to the embodiment of the present disclosure contains benzyl (meth)acrylate.

From the viewpoint of impact resistance, a content of the benzyl (meth)acrylate is preferably 50% by mass or more, more preferably 50% by mass to 70% by mass, and still more preferably 55% by mass to 65% by mass with respect to the total amount of the ink.

From the viewpoint of further improving the impact resistance and the blocking resistance, a mass ratio of the content of the benzyl (meth)acrylate to the content of the specific difunctional (meth)acrylate is preferably 2.0 to 5.0 and more preferably 2.0 to 4.0.

### Other polymerizable compounds

The ink according to the embodiment of the present disclosure may contain a polymerizable compound other than the specific difunctional (meth)acrylate and the benzyl (meth)acrylate, within a range not significantly impairing the effects of the present disclosure.

However, from the viewpoint of impact resistance and blocking resistance, it is desirable that a content of the other polymerizable compounds is low.

Specifically, the total content of the specific difunctional (meth)acrylate and the benzyl (meth)acrylate is preferably 95% by mass or more, and more preferably 98% by mass or more with respect to the total amount of the polymerizable compounds. The polymerizable compounds herein means all polymerizable compounds contained in the ink. From the above-described viewpoint, the total content of the specific difunctional (meth)acrylate and the benzyl (meth)acrylate may be 100% by mass with respect to the total amount of the polymerizable compounds.

In a case where the ink contains the other polymerizable compounds, the other polymerizable compounds are not particularly limited as long as they are compounds having a polymerizable group, other than the specific difunctional (meth)acrylate and the benzyl (meth)acrylate.

From the viewpoint of reactivity with the specific difunctional (meth)acrylate and the benzyl (meth)acrylate, a polymerizable group in the other polymerizable compounds is preferably a radically polymerizable group, more preferably an ethylenically unsaturated group, and still more preferably a (meth)acryloyloxy group. That is, the other polymerizable compounds are preferably a radically polymerizable compound, more preferably an ethylenically unsaturated compound, and still more preferably a (meth)acrylate compound.

The other polymerizable compounds may be a monofunctional polymerizable compound having one polymerizable group or a polyfunctional polymerizable compound having two or more polymerizable groups.

### Monofunctional polymerizable compound

Examples of the monofunctional polymerizable compound include monofunctional (meth)acrylate, monofunctional (meth)acrylamide, a monofunctional aromatic vinyl compound, monofunctional vinyl ether, and a monofunctional N-vinyl compound.

Examples of the monofunctional (meth)acrylate include methyl (meth)acrylate, ethyl (meth)acrylate, propyl (meth)acrylate, n-butyl (meth)acrylate, hexyl (meth)acrylate, 2-ethylhexyl (meth)acrylate, tert-octyl (meth)acrylate, isoamyl (meth)acrylate, decyl (meth)acrylate, isodecyl (meth)acrylate, lauryl (meth)acrylate, stearyl (meth)acrylate, isostearyl (meth)acrylate, cyclohexyl (meth)acrylate, 4-n-butylcyclohexyl (meth)acrylate, 4-tert-butylcyclohexyl (meth)acrylate, bornyl (meth)acrylate, isobomyl (meth)acrylate, 2-ethylhexyldiglycol (meth)acrylate, butoxyethyl (meth)acrylate, 2-chloroethyl (meth)acrylate, 4-bromobutyl (meth)acrylate, cyanoethyl (meth)acrylate, butoxymethyl (meth)acrylate, 3-methoxybutyl (meth)acrylate, 2-(2-methoxyethoxy)ethyl (meth)acrylate, 2-(2-butoxyethoxy)ethyl (meth)acrylate, 2,2,2-tetrafluoroethyl (meth)acrylate, 1H,1H,2H,2H-perfluorodecyl (meth)acrylate, 4-butylphenyl (meth)acrylate, phenyl (meth)acrylate, 2,4,5-tetramethylphenyl (meth)acrylate, 4-chlorophenyl (meth)acrylate, 2-phenoxymethyl (meth)acrylate, 2-phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, 2-hydroxyethyl (meth)acrylate, 3-hydroxypropyl (meth)acrylate, 2-hydroxypropyl (meth)acrylate, 2-hydroxybutyl (meth)acrylate, 3-hydroxybutyl (meth)acrylate, 4-hydroxybutyl (meth)acrylate, cyclic trimethylolpropane formal(meth)acrylate, phenylglycidyl ether (meth)acrylate, dimethylaminoethyl (meth)acrylate, diethylaminoethyl (meth)acrylate, dimethylaminopropyl (meth)acrylate, diethylaminopropyl (meth)acrylate, trimethoxysilylpropyl (meth)acrylate, trimethylsilylpropyl (meth)acrylate, polyethylene oxide monomethyl ether (meth)acrylate, polyethylene oxide (meth)acrylate, polyethylene oxide monoalkyl ether (meth)acrylate, dipropylene glycol (meth)acrylate, polypropylene oxide monoalkyl ether (meth)acrylate, 2-methacryloyloxyethyl succinate, 2-methacryloyloxyhexahydrophthalic acid, 2-methacryloyloxyethyl-2-hydroxypropyl phthalate, ethoxydiethylene glycol (meth)acrylate, butoxydiethylene glycol (meth)acrylate, trifluoroethyl (meth)acrylate, perfluorooctylethyl (meth)acrylate, 2-hydroxy-3-phenoxypropyl (meth)acrylate, ethylene oxide (EO)-modified phenol (meth)acrylate, EO-modified cresol (meth)acrylate, EO-modified nonylphenol (meth)acrylate, propylene oxide (PO)-modified nonylphenol (meth)acrylate, EO-modified-2-ethylhexyl (meth)acrylate, dicyclopentenyl (meth)acrylate, dicyclopentenyloxyethyl (meth)acrylate, dicyclopentanyl (meth)acrylate, (3-ethyl-3-oxetanylmethyl) (meth)acrylate, phenoxyethylene glycol (meth)acrylate, 2-carboxyethyl (meth)acrylate, and 2-(meth)acryloyloxyethyl succinate.

Examples of the monofunctional (meth)acrylamide include (meth)acrylamide, N-methyl (meth)acrylamide, N-ethyl (meth)acrylamide, N-propyl (meth)acrylamide, N-n-butyl (meth)acrylamide, N-t-butyl (meth)acrylamide, N-butoxymethyl (meth)acrylamide, N-isopropyl (meth)acrylamide, N-methylol (meth)acrylamide, N,N-dimethyl (meth)acrylamide, N,N-diethyl (meth)acrylamide, and (meth)acryloylmorpholine.

Examples of the monofunctional aromatic vinyl compound include styrene, dimethylstyrene, trimethylstyrene, isopropyl styrene, chloromethylstyrene, methoxystyrene, acetoxystyrene, chlorostyrene, dichlorostyrene, bromostyrene, vinyl benzoic acid methyl ester, 3-methylstyrene, 4-methylstyrene, 3-ethylstyrene, 4-ethylstyrene, 3-propyl styrene, 4-propylstyrene, 3-butylstyrene, 4-butylstyrene, 3-hexylstyrene, 4-hexylstyrene, 3-octylstyrene, 4-octylstyrene, 3-(2-ethylhexyl)styrene, 4-(2-ethylhexyl)styrene, allyl styrene, isopropenyl styrene, butenyl styrene, octenyl styrene, 4-t-butoxycarbonyl styrene, and 4-t-butoxystyrene.

Examples of the monofunctional vinyl ether include methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexyl methyl vinyl ether, 4-methylcyclohexyl methyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, and phenoxypolyethylene glycol vinyl ether.

Examples of the monofunctional N-vinyl compound include N-vinyl-ε-caprolactam and N-vinylpyrrolidone.

### Polyfunctional polymerizable compound

Examples of the polyfunctional polymerizable compound include a polyfunctional (meth)acrylate compound and a polyfunctional vinyl ether.

Examples of the polyfunctional (meth)acrylate include ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, tetraethylene glycol di(meth)acrylate, EO-modified neopentyl glycol di(meth)acrylate, PO-modified neopentyl glycol di(meth)acrylate, EO-modified hexanediol di(meth)acrylate, PO-modified hexanediol di(meth)acrylate, decanediol di(meth)acrylate, dodecanediol di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, tricyclodecanedimethanol di(meth)acrylate, trimethylolethane tri(meth)acrylate, trimethylolpropane tri(meth)acrylate, trimethylolpropane EO-added tri(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, tri(meth)acryloyloxyethoxytrimethylolpropane, glycerin polyglycidyl ether poly(meth)acrylate, and tris(2-acryloyloxyethyl) isocyanurate.

Examples of the polyfunctional vinyl ether include 1,4-butanediol divinyl ether, ethylene glycol divinyl ether, diethylene glycol divinyl ether, triethylene glycol divinyl ether, polyethylene glycol divinyl ether, propylene glycol divinyl ether, butylene glycol divinyl ether, hexanediol divinyl ether, 1,4-cyclohexanedimethanol divinyl ether, bisphenol A alkylene oxide divinyl ether, bisphenol F alkylene oxide divinyl ether, trimethylolethane trivinyl ether, trimethylolpropane trivinyl ether, ditrimethylolpropane tetravinyl ether, glycerin trivinyl ether, pentaerythritol tetravinyl ether, dipentaerythritol pentavinyl ether, dipentaerythritol hexavinyl ether, EO-added trimethylolpropane trivinyl ether, PO-added trimethylolpropane trivinyl ether, EO-added ditrimethylolpropane tetravinyl ether, PO-added ditrimethylolpropane tetravinyl ether, EO-added pentaerythritol tetravinyl ether, PO-added pentaerythritol tetravinyl ether, EO-added dipentaerythritol hexavinyl ether, and PO-added dipentaerythritol hexavinyl ether.

### Colorant

The ink according to the embodiment of the present disclosure contains at least one colorant.

In the present disclosure, the colorant means a substance which can be used for making the ink a chromatic ink or an achromatic ink, in a case of being contained in the ink.

The colorant may be a chromatic (for example, cyan, magenta, yellow, and the like) coloring material or an achromatic (for example, white and black) coloring material.

Examples of the colorant include a dye and a pigment. From the viewpoint of durability such as heat resistance, light resistance, and water resistance, the colorant is preferably a pigment.

In a case where a pigment is used as the colorant, the ink can contain the pigment as a pigment dispersion liquid. The pigment dispersion liquid is a liquid obtained by dispersing the pigment in a liquid medium using a dispersant, and contains at least the pigment, the dispersant, and the liquid medium. Details of the dispersant will be described later. In addition, the liquid medium may be an organic solvent or a polymerizable compound.

As the pigment, any commercially available organic pigment or inorganic pigment can be used. Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

A content of the colorant is preferably 0.5% by mass to 15% by mass, more preferably 1% by mass to 10% by mass, and still more preferably 2% by mass to 5% by mass with respect to the total amount of the ink.

### Dispersant

In a case where a pigment is used as the colorant, the ink can contain the pigment as a pigment dispersion liquid. The pigment can be dispersed in the liquid medium by using the dispersant. As the dispersant, a generally known dispersant can be used. From the viewpoint of dispersion stability, the dispersant is preferably a compound having both a hydrophilic structure and a hydrophobic structure.

Examples of the dispersant include low-molecular-weight dispersants having a molecular weight of less than 1,000, such as higher fatty acid salt, alkyl sulfate, alkyl ester sulfate, alkyl sulfonate, sulfosuccinate, naphthalene sulfonate, alkyl phosphate, polyoxyalkylene alkyl ether phosphate, polyoxyalkylene alkyl phenyl ether, polyoxyethylene polyoxypropylene glycol, glycerin fatty acid ester, sorbitan fatty acid ester, polyoxyethylene fatty acid amide, and amine oxide.

In addition, examples of the dispersant include high-molecular-weight dispersants having a molecular weight of 1,000 or more, which are obtained by copolymerizing a hydrophilic monomer and a hydrophobic monomer. From the viewpoint of dispersion stability, as the hydrophilic monomer, a dissociable group-containing monomer is preferable, and a dissociable group-containing monomer which has a dissociable group and an ethylenically unsaturated bond is more preferable. Examples of the dissociable group-containing monomer include a carboxy group-containing monomer, a sulfonic acid group-containing monomer, and a phosphoric acid group-containing monomer. From the viewpoint of dispersion stability, the hydrophobic monomer is preferably an aromatic group-containing monomer which has an aromatic group and an ethylenically unsaturated bond, or an aliphatic hydrocarbon group-containing monomer which has an aliphatic hydrocarbon group and an ethylenically unsaturated bond. The polymer may be either a random copolymer or a block copolymer.

The dispersant may be a commercially available product. Examples of a commercially available product thereof include DISPERBYK-101, DISPERBYK-102, DISPERBYK-103, DISPERBYK-106, DISPERBYK-110, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (all are manufactured by BYK-Chemie GmbH); and SOLSPERSE3000, SOLSPERSE5000, SOLSPERSE9000, SOLSPERSE12000, SOLSPERSE13240, SOLSPERSE13940, SOLSPERSE17000, SOLSPERSE22000, SOLSPERSE24000, SOLSPERSE26000, SOLSPERSE28000, SOLSPERSE32000, SOLSPERSE36000, SOLSPERSE39000, SOLSPERSE41000, and SOLSPERSE71000 (all manufactured by Lubrizol Corporation).

As a dispersion apparatus for dispersing the pigment, a known dispersion apparatus can be used, and examples thereof include a ball mill, a sand mill, a beads mill, a roll mill, a jet mill, a paint shaker, an attritor, an ultrasonic disperser, and a disper.

In the ink, from the viewpoint of dispersion stability, a content of the dispersant with respect to the content of the pigment is preferably 0.05 to 1.0 and more preferably 0.1 to 0.5 on a mass basis.

### Surfactant

It is preferable that he ink according to the embodiment of the present disclosure contains at least one surfactant.

Examples of the surfactant include a silicone-based surfactant, an acetylene glycol-based surfactant, and a polyoxyethylene alkyl ether-based surfactant.

It is preferable that he ink according to the embodiment of the present disclosure contains at least one silicone-based surfactant.

In a case where the silicone-based surfactant is contained, a surface tension of the ink is lowered, and wettability with a substrate or an underlayer formed on the substrate is improved. As a result, image quality of the image to be obtained is improved.

Among these, the silicone-based surfactant is preferably a silicone-based surfactant having a (meth)acryloyl group.

In a case where the ink contains a silicone-based surfactant having a (meth)acryloyl group, a polymerization reaction between the specific difunctional (meth)acrylate and the benzyl (meth)acrylate proceeds, and the impact resistance and the blocking resistance are improved.

The number of (meth)acryloyl groups included in the silicone-based surfactant having a (meth)acryloyl group may be only one or two or more.

From the viewpoint of separation properties, the number of (meth)acryloyl groups is preferably 2 or more and more preferably 3 or more. The upper limit value of the number of (meth)acryloyl groups is not particularly limited, but from the viewpoint of j ettability, it is 5, for example.

The silicone-based surfactant having a (meth)acryloyl group is preferably polyether-modified polymethylsiloxane having a (meth)acryloyl group. In the polyether-modified polydimethylsiloxane having a (meth)acryloyl group, a position of a polyether chain is not particularly limited, and may be one terminal of a main chain, both terminals of the main chain, or a side chain. The polyether chain is preferably a polyoxyalkylene chain.

Examples of a commercially available product of the silicone-based surfactant having a (meth)acryloyl group include BYK-UV3500, 3505, 3530, 3570, 3575, and 3576 (manufactured by BYK); Tegorad 2100, 2200, 2250, 2300, 2500, 2600, 2700, 2800, 2010, and 2011 (manufactured by Evonik Industries AG); EBECRYL 350 and 1360 (manufactured by Daicel-Allnex Ltd.); and KP-410, 411, 412, 413, 414, 415, 416, 418, 420, 422, and 423 (manufactured by Shin-Etsu Chemical Co., Ltd.).

The silicone-based surfactant contains a polyether structure and a polysiloxane structure, and a mass ratio of a content of the polysiloxane structure to a content of the polyether structure is preferably 0.6 or less, and more preferably 0.4 or less. The lower limit value of the above-described mass ratio is, for example, 0.2.

By setting the above-described mass ratio to be 0.6 or less, in a case where an overcoat layer is provided on the image, it is possible to suppress peeling of an overcoat liquid used for forming the overcoat layer on the image surface.

The mass ratio of the content of the polysiloxane structure to the content of the polyether structure is calculated by nuclear magnetic resonance (NMR; ¹H-NMR).

A content of the surfactant is preferably 0.01% by mass to 5% by mass and more preferably 0.05% by mass to 2% by mass with respect to the total amount of the ink.

### Polymerization initiator

The ink according to the embodiment of the present disclosure may contain at least one polymerization initiator. The polymerization initiator is preferably a radical polymerization initiator which generates radicals.

Examples of the radical polymerization initiator include an alkylphenone compound, an acylphosphine compound, an aromatic onium salt compound, an organic peroxide, a thio compound, a hexaarylbiimidazole compound, a ketoxime ester compound, a borate compound, an azinium compound, a metallocene compound, an active ester compound, a carbon halogen bond-containing compound, and an alkylamine compound.

Among these, as the polymerization initiator, at least one compound selected from the group consisting of an acylphosphine compound and a thio compound is preferable, and at least one compound selected from the group consisting of an acylphosphine oxide compound and a thioxanthone compound is more preferable. It is still more preferable to use an acylphosphine oxide compound and a thioxanthone compound in combination.

Examples of the acylphosphine oxide compound include a monoacylphosphine oxide compound and a bisacylphosphine oxide compound.

Examples of the monoacylphosphine oxide compound include isobutyryl diphenylphosphine oxide, 2-ethylhexanoyldiphenylphosphine oxide, 2,4,6-trimethylbenzoyldiphenylphosphine oxide, (2,4,6-trimethylbenzoyl)ethoxyphenylphosphine oxide, o-toluyldiphenylphosphine oxide, p-t-butylbenzoyldiphenylphosphine oxide, 3-pyridylcarbonyldiphenylphosphine oxide, acryloyl diphenylphosphine oxide, benzoyl diphenylphosphine oxide, pivaloyl phenylphosphinic acid vinyl ester, adipoyl bisdiphenylphosphine oxide, pivaloyl diphenylphosphine oxide, p-toluyldiphenylphosphine oxide, 4-(t-butyl)benzoyldiphenylphosphine oxide, terephthaloyl bisdiphenylphosphine oxide, 2-methylbenzoyldiphenylphosphine oxide, versatoyl diphenylphosphine oxide, 2-methyl-2-ethylhexanoyldiphenylphosphine oxide, 1-methyl-cyclohexanoyldiphenylphosphine oxide, pivaloyl phenylphosphinic acid methyl ester, and pivaloyl phenylphosphinic acid isopropyl ester.

Examples of the bisacylphosphine oxide compound include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, phenylbis(2,4,6-trimethylbenzoyl)phosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

Examples of the thioxanthone compound include thioxanthone, 2-isopropylthioxanthone, 4-isopropylthioxanthone, 2-chlorothioxanthone, 2,4-dichlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, n-allylthioxanthone-3,4-dicarboxyimide, n-octylthioxanthone-3,4-dicarboxyimide, N-(1,1,3,3-tetramethylbutyl)thioxanthone-3,4-dicarboxyimide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9H-thioxanthone-2-yloxy)-N,N,N-trimethyl-1-propaneaminium chloride.

The thioxanthone compound may be a commercially available product. Examples of the commercially available product include SPEEDCURE series (for example, SPEEDCURE 7010, SPEEDCURE CPTX, SPEEDCURE ITX, and the like) manufactured by Lambson.

From the viewpoint of further reducing the odor, as the polymerization initiator, the ink according to the embodiment of the present disclosure preferably contains at least one selected from the group consisting of phenylbis(2,4,6-trimethylbenzoyl)phosphine oxide and (2,4,6-trimethylbenzoyl)ethoxyphenylphosphine oxide, and more preferably contains phenylbis(2,4,6-trimethylbenzoyl)phosphine oxide and (2,4,6-trimethylbenzoyl)ethoxyphenylphosphine oxide.

In addition, from the viewpoint of further reducing the odor, the total content of at least one selected from the group consisting of phenylbis(2,4,6-trimethylbenzoyl)phosphine oxide and (2,4,6-trimethylbenzoyl)ethoxyphenylphosphine oxide (preferably, the total content of phenylbis(2,4,6-trimethylbenzoyl)phosphine oxide and (2,4,6-trimethylbenzoyl)ethoxyphenylphosphine oxide) is preferably 3.5% by mass or more, and more preferably 5% by mass or more with respect to the total amount of the ink. The upper limit value of the above-described total content is not particularly limited, but for example, it is 10% by mass.

Furthermore, from the viewpoint of further reducing the odor, the ink according to the embodiment of the present disclosure preferably contains, as the polymerization initiator, a compound having two or more thioxanthone skeletons in the molecule.

A content of the compound having two or more thioxanthone skeletons in the molecule is preferably 1% by mass to 10% by mass, and more preferably 2% by mass to 8% by mass with respect to the total amount of the ink.

### Polymerization inhibitor

The ink according to the embodiment of the present disclosure preferably contains at least one polymerization inhibitor.

Examples of the polymerization inhibitor include a hydroquinone compound, phenothiazine, catechols, alkylphenols, alkylbisphenols, zinc dimethyldithiocarbamate, copper dimethyldithiocarbamate, copper dibutyldithiocarbamate, copper salicylate, a thiodipropionic acid ester, mercaptobenzimidazole, phosphites, a nitrosamine compound, a hindered amine compound, and a nitroxyl radical.

Among these, the polymerization inhibitor is still more preferably a nitrosamine compound.

Examples of the nitrosamine compound include an N-nitroso-N-phenylhydroxylamine aluminum salt and N-nitroso-N-phenylhydroxylamine. Among these, as the nitrosamine compound, an N-nitroso-N-phenylhydroxylamine aluminum salt is preferable.

From the viewpoint of improving temporal stability of the ink, a content of the polymerization inhibitor is preferably 0.05% by mass to 1% by mass with respect to the total amount of the ink.

### Additive

The ink according to the embodiment of the present disclosure may contain additives such as a co-sensitizer, an ultraviolet absorbing agent, an antioxidant, a fading inhibitor, a conductive salt, a solvent, and a basic compound, as necessary.

### Physical properties

A viscosity of the ink is preferably 0.5 mPa s to 50 mPa·s, more preferably 5 mPa s to 40 mPa s, still more preferably 7 mPa s to 35 mPa s, and even more preferably 8 mPa s to 30 mPa s. The viscosity is measured at 25°C using a viscometer, for example, a TV-22 type viscometer manufactured by Toki Sangyo Co., Ltd.

A surface tension of the ink is preferably 60 mN/m or less, and more preferably 23 mN/m to 26 mN/m.

By setting the surface tension to be 23 mN/m to 26 mN/m, in a case where an overcoat layer is provided on the image, it is possible to suppress peeling of an overcoat liquid used for forming the overcoat layer on the image surface.

The surface tension is measured at 25°C using a surface tension meter, for example, by a plate method using an automatic surface tension meter (trade name, "CBVP-Z") manufactured by Kyowa Interface Science Co., Ltd.

### Image recording method

The image recording method according to the embodiment of the present disclosure includes a step of applying the above-described ink onto a substrate by an inkjet recording method (hereinafter, also referred to as "ink applying step"), and a step of irradiating the applied ink with active energy ray to record an image (hereinafter, also referred to as "active energy ray irradiating step").

### Step of applying ink by inkjet recording method

### Substrate

The type of the substrate is not particularly limited, and a generally known substrate can be used as the substrate. Examples of the substrate include metal, glass, quartz, and plastic. Examples of a resin constituting the plastic include cellulose diacetate, cellulose triacetate, cellulose propionate, cellulose butyrate, cellulose acetate butyrate, cellulose nitrate, an acrylic resin, a chlorinated polyolefin resin, a polyether sulfone resin, polyethylene terephthalate (PET), polyethylene naphthalate, nylon, polyethylene, polystyrene, polypropylene, a polycycloolefin resin, a polyimide resin, a polycarbonate resin, and polyvinyl acetal. The plastic may be a film containing only one of these resins or a film mixing two or more of these resins.

A thickness of the substrate is not particularly limited, and is, for example, 1 µm to 10 mm.

Among these, since the ink according to the embodiment of the present disclosure is excellent in impact resistance and blocking resistance, it is preferable to use metal or plastic as the substrate, and it is more preferable to use metal. A molded body of metal (for example, a food can, a beverage can, an aerosol can, or the like) can be obtained by recording an image on a flat metal substrate and then performing a molding step described later. In the image recording method according to the present disclosure, the image may be recorded on a molded substrate.

### Underlayer

In a case where metal is used as the substrate, it is preferable that the ink is applied onto an underlayer after the underlayer is provided on the substrate.

Examples of the underlayer include an anchor coating layer, a base coating layer, and a white coating layer. In a case where the underlayer is a white coating layer, it is desirable that the underlayer contains titanium oxide as a pigment.

A method for forming the underlayer is not particularly limited, and may be, for example, a method of applying an ink for forming the underlayer, containing a crosslinkable resin, or a method of laminating a film containing a crosslinkable resin. A thickness of the underlayer is not particularly limited, and can be appropriately adjusted.

The underlayer preferably contains a crosslinkable resin.

The crosslinkable resin may be a thermally crosslinkable resin which is crosslinked by heat, or may be an active energy ray-crosslinkable resin which is crosslinked by active energy ray.

Examples of the crosslinkable resin include (meth)acrylic resins such as polyacrylonitrile, polymethyl acrylate, and polymethyl methacrylate; polyester resins such as polyethylene terephthalate, isophthalic acid-modified polyethylene terephthalate, and polyethylene naphthalate; epoxy resins such as a bisphenol A-type epoxy resin, a bisphenol F-type epoxy resin, and a cresol novolac epoxy resin; vinyl resins such as polyvinyl acetate and polyvinyl chloride; urethane resins such as a diphenylmethane diisocyanate-polyethylene glycol copolymer; and amino resins such as a melamine resin, a urea resin, and a benzoquanamine resin. The crosslinkable resin may be contained only one kind or two or more kinds thereof.

The underlayer may further contain a resin other than the crosslinkable resin, a crosslinking agent, a crosslinking promoter, various additives, and the like.

The method for forming the underlayer can be appropriately selected depending on the crosslinkable resin.

In a case where the crosslinkable resin is a thermally crosslinkable resin, it is preferable that the substrate is coated with the ink for forming the underlayer and then baked.

The baking temperature is, for example, 140°C to 230°C.

The baking time is, for example, 1 minute to 60 minutes.

In addition, in a case where the crosslinkable resin is an active energy ray-curable resin, it is preferable that the substrate is coated with the ink for forming the underlayer and then irradiated with active energy ray.

### Inkjet recording method

The ink jet recording method is not particularly limited as long as it is a method capable of recording an image, and a known method can be used. Examples of the ink jet recording method include an electric charge control method of ejecting ink by using an electrostatic attraction force; a drop-on-demand method (pressure pulse method) of using a vibration pressure of a piezo element; an acoustic ink jet method of converting an electric signal into an acoustic beam, irradiating ink, and ejecting the ink using a radiation pressure; and a thermal ink jet (Bubble jet (registered trademark)) method of heating ink to form air bubbles and utilizing the generated pressure.

Examples of ink jet heads used in the inkjet recording method include inkjet heads for a shuttle method of using short serial heads that are caused to scan a substrate in a width direction of the substrate so as to perform recording and inkjet heads for a line method of using line heads that each consist of recording elements arranged for the entire area of each side of a substrate.

In the line method, pattern formation can be performed on the entire surface of a substrate by scanning the substrate in a direction perpendicular to a direction in which the recording elements are arranged, and a transport system such as a carriage that scans a short head is unnecessary. In addition, in the line method, complicated scanning control for moving a carriage and a substrate is not necessary, and only a substrate moves. Therefore, the recording speed can be further increased in the line method than in the shuttle method.

A liquid droplet volume of the ink jetted from the ink jet head is preferably 1 pL (picoliter) to 100 pL, more preferably 3 pL to 80 pL, and still more preferably 3 pL to 50 pL.

### Active energy ray irradiating step

Examples of the active energy ray include γ-rays, β-rays, electron beams, ultraviolet rays, and visible rays. Among these, ultraviolet rays are preferable as the active energy ray.

A peak wavelength of the ultraviolet rays is, for example, preferably 200 nm to 405 nm, more preferably 250 nm to 400 nm, and still more preferably 300 nm to 400 nm.

As a light source for the ultraviolet irradiation, a mercury lamp and various lasers such as a gas laser and a solid-state laser are mainly used, and a mercury lamp and discharge lamps such as a metal halide lamp and an ultraviolet fluorescent lamp are widely known light sources. In addition, a semiconductor light source such as ultraviolet light emitting diode (UV-LED) or ultraviolet laser diode (UV-LD) is expected as the light source for the ultraviolet irradiation because it is compact, has long service life and high efficiency, and is inexpensive. Among these, a metal halide lamp, a high-pressure mercury lamp, a medium-pressure mercury lamp, a low-pressure mercury lamp, or UV-LED is preferable as the light source for the ultraviolet irradiation.

In the present disclosure, polymerization of only some of the polymerizable monomers in the ink is also referred to as "temporary curing", and active energy ray irradiation for the temporary curing is also referred to as "pinning exposure".

In the present disclosure, polymerization of substantially all the polymerizable compounds in the ink is also referred to as "full curing", and active energy ray irradiation for the full curing is also referred to as "main exposure".

In the active energy ray irradiating step, it is preferable that the ink is temporarily cured and then fully cured. Specifically, it is preferable to perform the pinning exposure on the ink after the application of the ink, and then finally to perform the main exposure.

A reaction rate of the ink after the pinning exposure is preferably 10% to 80%.

Here, the reaction rate of the ink means a polymerization rate of the polymerizable compounds contained in the ink, which is determined by high-performance liquid chromatography.

In a case where the reaction rate of the ink is 10% or more, insufficient spread of dots is suppressed, and as a result, graininess of the finally obtained image is improved.

In addition, in a case where the reaction rate of the ink is 80% or less, droplet interference between dots of the ink is suppressed, and as a result, the image quality of the finally obtained image is improved.

From the viewpoint of further improving the graininess of the finally obtained image, the reaction rate of the ink is preferably 15% or more.

From the viewpoint of further improving the image quality of the finally obtained image, the reaction rate of the ink is preferably 75% or less, more preferably 50% or less, still more preferably 40% or less, even more preferably 30% or less, and even still more preferably 25% or less.

A reaction rate of the ink after the main exposure is preferably more than 80% and 100% or less, more preferably 85% to 100%, and still more preferably 90% to 100%.

In a case where the reaction rate is more than 80%, the adhesiveness is further improved.

The reaction rate of the ink is obtained by the following method.

A substrate which has been subjected to an operation until the irradiation of the ink with an active energy ray is completed is prepared. A sample piece having a size of 20 mm × 50 mm (hereinafter, referred to as a sample piece after irradiation) is cut out from a region of the substrate where the ink film is present. The cut sample piece after irradiation is immersed in 10 mL of tetrahydrofuran (THF) for 24 hours, thereby obtaining an eluate containing the eluted ink. High-performance liquid chromatography is performed on the obtained eluate to obtain an amount of the polymerizable compounds (hereinafter, called "amount X1 of monomers after irradiation").

Separately, the same operation as described above is performed except that the ink on the substrate is not irradiated with the active energy ray, and an amount of polymerizable compounds (hereinafter, called "amount X1 of monomers before irradiation") is obtained.

Based on the amount X1 of monomers after irradiation and the amount X1 of monomers before irradiation, the reaction rate (%) of the ink is obtained by the following expression. Reaction rate of ink (%) = ((Amount X1 of monomers before irradiation - Amount X1 of monomers after irradiation)/Amount X1 of monomers before irradiation) × 100

From the viewpoint of achieving the above-described reaction rate of the ink more easily, an exposure amount of the active energy ray for the pinning exposure is preferably 10 mJ/cm² to 100 mJ/cm² and more preferably 20 mJ/cm² to 60 mJ/cm².

From the viewpoint of fully curing the ink, an exposure amount of the active energy ray for the main exposure is preferably 50 mJ/cm² to 1000 mJ/cm² and more preferably 200 mJ/cm² to 800 mJ/cm².

In the main exposure, from the viewpoint of improving the adhesiveness to the substrate, it is preferable to perform the irradiation with an active energy ray in an atmosphere at an oxygen concentration of less than 1% by volume. The oxygen concentration is more preferably 0.5% by volume or less, and still more preferably 0.3% by volume or less.

In the active energy ray irradiating step, from the viewpoint of image quality, it is preferable to perform the irradiation with an active energy ray within 0.1 seconds to 5 seconds after the ink has landed. In a case where the pinning exposure and the main exposure are performed, it is preferable to perform the irradiation with an active energy ray for the pinning exposure within 0.1 seconds to 5 seconds after the ink has landed. The time immediately before a timing of ink landing to irradiation with an active energy ray (in a case where the pinning exposure and the main exposure are performed, active energy ray for the pinning exposure) is more preferably within 0.2 seconds to 1 second.

### Overcoat layer forming step

It is preferable that the image recording method according to the embodiment of the present disclosure further includes a step of forming an overcoat layer on the recorded image.

By providing the overcoat layer, it is possible to suppress damage or the like to the image in a case where molding described later is performed.

As an overcoat liquid for forming the overcoat layer, a generally known transparent coating material can be adopted. Examples of the known transparent coating material include transparent coating materials containing a thermosetting resin such as a polyester resin, an acrylic resin, and an epoxy resin; a curing agent such as an amino resin, a phenol resin, and an isocyanate resin; and a lubricant such as paraffin wax, polyethylene wax, and silicone wax.

The overcoat layer is formed, for example, by applying the overcoat liquid onto the image and then baking the image.

The baking temperature is, for example, 140°C to 230°C.

The baking time is, for example, 1 minute to 60 minutes.

### Manufacturing method of molded body

The manufacturing method of a molded body according to the embodiment of the present disclosure includes a step of applying the above-described ink onto a substrate by an ink jet recording method (hereinafter, also referred to as "ink applying step"); a step of irradiating the applied ink with active energy ray to record an image (hereinafter, also referred to as "active energy ray irradiating step"); and a step of molding the substrate on which the image has been recorded to manufacture a molded body (hereinafter, also referred to as "molding step").

The ink applying step and the active energy ray irradiating step in the manufacturing method of a molded body according to the embodiment of the present disclosure are the same as the ink applying step and the active energy ray-irradiating step in the image recording method according to the embodiment of the present disclosure, except for the following points.

In the ink applying step, the substrate is not particularly limited as long as it is a moldable substrate. The substrate is preferably metal or plastic, and more preferably metal.

### Molding step

A molding method is not particularly limited, and examples thereof include bending molding, vacuum molding, extrusion molding, injection molding, compression molding, and blow molding.

A shape of the molded body is not particularly limited, and is appropriately set according to the application.

The ink according to the embodiment of the present disclosure has excellent blocking resistance. For example, even in a case where a flat metal substrate on which the image has been recorded is stacked before the molding step, peeling of the image is unlikely to occur. Therefore, it is possible to store the metal substrate on which the image had been recorded before the molding step, and the molding step can be performed at a desired timing.

The ink according to the present disclosure has excellent impact resistance. Therefore, the image is less likely to be broken even in a case where the molding step is performed. Therefore, a molded body having excellent decorative properties can be obtained.

### Examples

Hereinafter, the present disclosure will be described in more detail using Examples. However, the present disclosure is not limited to the following examples as long as it does not exceed the gist of the present invention.

Examples 1 to 14 and Comparative Examples 1 to 6

### Preparation of cyan ink

In a case of preparing a cyan ink, first, a cyan pigment dispersion liquid was prepared.

### Cyan pigment dispersion liquid A

A cyan pigment (30 parts by mass), SOLSPERSE 32000 (9 parts by mass) as a dispersant, 3MPDDA (60 parts by mass) as a dispersion medium, and UV22 (1 part by mass) as a polymerization inhibitor were charged into a disperser motor mill M50 (manufactured by Eiger Machinery), and dispersed with zirconia beads having a diameter of 0.65 mm at a circumferential speed of 9 m/s for 4 hours to obtain a cyan pigment dispersion liquid A.

### Cyan pigment dispersion liquid B

A cyan pigment dispersion liquid B was obtained by the same method as in the cyan pigment dispersion liquid A, except that DDDA was used as the dispersion medium instead of 3MPDDA.

### Cyan pigment dispersion liquid C

A cyan pigment dispersion liquid C was obtained by the same method as in the cyan pigment dispersion liquid A, except that BDDA was used as the dispersion medium instead of 3MPDDA.

Details of the components contained in the cyan pigment dispersion liquids A to C are as follows.
· Cyan pigment: C.I.Pigment Blue 15:4 (product name "Heliogen (registered trademark) Blue D 7110 F", manufactured by Sun Chemical (DIC Corporation))
SOLSPERSE 32000: polyethyleneimine-based dispersant (product name "SOLSPERSE 32000", manufactured by Lubrizol Corporation)
· 3MPDDA: 3-methyl-1,5-pentanediol diacrylate (product name "SR341", manufactured by Sartomer)
· DDDA: 1,10-decanediol diacrylate (product name "SR595", manufactured by Sartomer)
· BDDA: 1,4-butanediol diacrylate (product name "VISCOAT #195", manufactured by OSAKA ORGANIC CHEMICAL INDUSTRY LTD.)
UV22: mixture of 2,6-bis(1,1-dimethylethyl)-4-(phenylmethylene)-2,5-cyclohexadien-1-one and propoxylated glycerin triacrylate (product name "IRGASTAB UV-22", manufactured by BASF)

In addition, the UV22 contained propoxylated glycerin triacrylate as other polymerizable compounds, but since a content of the propoxylated glycerin triacrylate was very small, all the content of UV22 was shown in the column of "Polymerization inhibitor" in the tables.

Next, the prepared cyan pigment dispersion liquid and components shown in Tables 1 to 3 were mixed such that the content of each component was a content (% by mass) shown in Tables 1 to 3. In Examples 1 to 14 and Comparative Examples 3 to 6, the cyan pigment dispersion liquid A was used. In Comparative Example 1, the cyan pigment dispersion liquid B was used. In Comparative Example 2, the cyan pigment dispersion liquid C was used.

The mixture was stirred for 20 minutes at 25°C under the conditions of 5000 rpm using a mixer (product name "L4R", manufactured by Silverson), thereby obtaining a cyan ink.

Details of each of the components described in Tables 1 to 3 are as follows.

Speedcure 7010L (manufactured by Lambson) was used for preparing the ink. Speedcure 7010L is a mixture of Speedcure 7010 and EOTMPTA, and the mixing ratio thereof is 1: 1 on a mass basis. Since Speedcure 7010 is a polymerization initiator and EOTMPTA is other polymerizable compounds, each of them will be described in the column of the polymerization initiator and the other polymerizable compounds.

### Specific difunctional (meth)acrylate

The specific difunctional (meth)acrylate is a difunctional (meth)acrylate having a linear or branched alkylene group having 5 to 9 carbon atoms.
· 3MPDDA: as described above
· HDDA: 1,6-hexanediol diacrylate (product name "VISCOAT #230", manufactured by OSAKA ORGANIC CHEMICAL INDUSTRY LTD.)
· NDDA: 1,9-hexanediol diacrylate (product name "VISCOAT #260", manufactured by OSAKA ORGANIC CHEMICAL INDUSTRY LTD.)
· PDDA: 1,5-pentanediol diacrylate (product name "QH-0602", manufactured by FUJIFII,M Wako Pure Chemical Corporation)

### Benzyl (meth)acrylate

· BzA: benzyl acrylate (product name "VISCOAT #160", manufactured by OSAKA ORGANIC CHEMICAL INDUSTRY LTD.)

### Other polymerizable compounds

The other polymerizable compounds are polymerizable compounds other than the specific difunctional (meth)acrylate and the benzyl (meth)acrylate.
· DDDA: as described above
· BDDA: as described above
· LA: lauryl acrylate (product name "LA", manufactured by OSAKA ORGANIC CHEMICAL INDUSTRY LTD.)
· IBOA: isobomyl acrylate (product name "IBXA", manufactured by OSAKA ORGANIC CHEMICAL INDUSTRY LTD.)
· EOTMPTA: EO-added trimethylolpropane triacrylate (taking up 50% by mass of product name "Speedcure 7010L", manufactured by Lambson)

### Polymerization initiator

· BAPO: bis(2,4,6-trimethylbenzoyl)phenylphosphine oxide (product name "Omnirad 819", manufactured by IGM Resins B.V)
· TPO-L: (2,4,6-trimethylbenzoyl)ethoxyphenylphosphine oxide (product name "Omnirad TPO-L", manufactured by IGM Resins B.V.)
Speedcure 7010: 1,3-di({α-[1-chloro-9-oxo-9H-thioxanthen-4-yl)oxy]acetylpoly[oxy(1-methylethylene)]}oxy)-2,2-bis({α-[1-methylethylene)]}oxymethyl)propane (50% by mass of product name "Speedcure 7010L" manufactured by Lambson)

### Polymerization inhibitor

· UV22: as described above

### Silicone-based surfactant

A mass ratio M of the content of the polysiloxane structure to the content of the polyether structure is as follows.
- TEGORAD 2500: (meth)acryloyl group-containing silicone-based surfactant (product name "TEGORAD 2500", manufactured by Evonik Industries AG; mass ratio M: 0.937369)
- TEGORAD 2200N: (meth)acryloyl group-containing silicone-based surfactant (product name "TEGORAD 2200N", manufactured by Evonik Industries AG; mass ratio M: 0.36319)
- TEGORAD 2250: (meth)acryloyl group-containing silicone-based surfactant (product name "TEGORAD 2250", manufactured by Evonik Industries AG; mass ratio M: 0.451587)
- TEGORAD 2300: (meth)acryloyl group-containing silicone-based surfactant (product name "TEGORAD 2300", manufactured by Evonik Industries AG; mass ratio M: 0.612617)

### Colorant

· Cyan pigment: as described above

### Dispersant

· SOLSPERSE 32000: as described above

### Image recording

### Underlayer forming step

An ink for forming an underlayer (product name "WA38", acrylic epoxy white base coat, manufactured by DIC Graphics Corporation) was applied onto a substrate (tin-free steel plate (product name "CAN SUPER SR tinfree steel", manufactured by NIPPON STEEL CORPORATION)) with an application amount of 70 mg/100 cm². Thereafter, the substrate was baked at 190°C for 5 minutes to form an underlayer on the substrate.

### Ink applying step and active energy ray irradiating step

The cyan ink was applied twice using an ink jet recording device including an ink jet head (product name "Samba G3L", manufactured by FUJIFILM Dimatix Inc.). Specifically, as a first layer, the cyan ink was applied onto a rectangular region of 5 cm × 5 cm in the underlayer under the condition of a resolution of 1200 × 1200 dots per inch (dpi), and a 100% solid image with an ink amount of 6.8 g/m² was recorded. Thereafter, an LED light source attached to the ink jet recording device was used to irradiate the ink with ultraviolet rays at an exposure amount of 20 mJ/cm². As the LED light source, an UV-LED irradiator (product name "G4B", manufactured by KYOCERA Corporation) with a peak wavelength of 385 nm was used. As a second layer, the cyan ink was applied onto the cyan image, which was a rectangle having a size of 5 cm × 5 cm, under the condition of a resolution of 1200 × 1200 dots per inch (dpi), and a 100% solid image with an ink amount of 6.8 g/m² was recorded. Thereafter, the LED light source attached to the inkjet recording device was used to irradiate the ink with ultraviolet rays at an exposure amount of 800 mJ/cm², thereby obtaining an image recorded material.

### Overcoat layer forming step

An image-recorded surface of the image recorded material was coated with an overcoat liquid (product name "GP505W-1 clear coating", T&K Toka, containing a polyester resin) in a coating amount of 10 g/m², and the image recorded material baked at 190°C for 5 minutes.

### Evaluation

For each of Examples and Comparative Examples, using the obtained image recorded material, impact resistance, blocking resistance, adhesiveness, overcoat suitability, and image quality were evaluated.

### The evaluation methods were as follows.

### Impact resistance

A sphere of an impact protrusion, having a weight of 500 g and a ball radius of 12.7 mm, was dropped onto the image recorded material on which the overcoat layer was formed, using a DuPont impact tester (manufactured by TOYO SEIKI SEISAKUSHO LTD.). A falling height of the sphere was set to 10 cm, and the presence or absence of breakage of the image (ink film) on the image-recorded surface of the image recorded material was confirmed. In a case where the image was broken, the test was terminated, and in a case where the image was not broken, the same test was performed with a falling height of the sphere set to 20 cm. This test was performed in the order of the falling height of the sphere of 10 cm, 20 cm, 25 cm, and 30 cm. The evaluation standard was as follows.
5: no breakage occurred even at a height of 30 cm.
4: breakage occurred at a height of 30 cm.
3: breakage occurred at a height of 25 cm.
2: breakage occurred at a height of 20 cm.
1: breakage occurred at a height of 10 cm.

### Blocking resistance

The image-recorded surface of the image recorded material, before forming the overcoat layer, was brought into contact with a tin-free steel plate, a load of 0.5 ton/m² was applied thereto, the image recorded material was stored for 24 hours in a test environment of 10°C, and then the image-recorded surface was peeled off from the tin-free steel plate in an environment of 25°C. In this case, the presence or absence of peeling of the image (ink film) was visually confirmed. In a case where the image was peeled off, the test was terminated, and in a case where the image was not peeled off, the test was performed in the same manner in an environment of 25°C. This test was performed in the order of the test environment of 10°C, 25°C, 30°C, and 45°C. The evaluation standard was as follows.
5: peeling did not occur even at 45°C.
4: peeling occurred at 45°C.
3: peeling occurred at 30°C.
2: peeling occurred at 25°C.
1: peeling occurred at 10°C.

### Adhesiveness

A cross cut test was performed on the image recorded material on which the overcoat layer was formed. The test results were classified based on JIS K5600-5-6 (ISO 2409). In Classification 0, the adhesiveness was most excellent. The evaluation standard was as follows.
5: Classification 0
4: Classification 1
3: Classification 2
2: Classification 3
1: Classification 4 or more

### Overcoat suitability

An image-recorded surface of the image recorded material, before forming the overcoat layer, was coated with an overcoat liquid (product name "GP505W-1 clear coating", T&K Toka, containing a polyester resin) in a coating amount of 20 g/m², and it was confirmed whether or not cissing occurred. In a case where the cissing occurred, the test was terminated, and in a case where the cissing did not occur, the same test was performed with the coating amount of the overcoat liquid set to 15 g/m². This test was performed in the order of the coating amount of the overcoat liquid of 20 g/m², 15 g/m², 10 g/m², and 5 g/m². The evaluation standard was as follows.
5: no cissing occurred even at a coating amount of 5 g/m².
4: cissing occurred at a coating amount of 5 g/m².
3: cissing occurred at a coating amount of 10 g/m².
2: cissing occurred at a coating amount of 15 g/m².
1: cissing occurred at a coating amount of 20 g/m².

### Image quality

After forming the underlayer on the substrate, the cyan ink was applied under the condition of a resolution of 1200 × 1200 dots per inch (dpi), and a 100% solid image with an ink amount of 7.4 g/m² was recorded. Thereafter, an LED light source attached to the ink jet recording device was used to irradiate the ink with ultraviolet rays at an exposure amount of 50 mJ/cm². The image-recorded surface was observed with a loupe (50 times), and the presence or absence of a gap was confirmed. In a case where the gap was present, the test was terminated, and in a case where no gap was present, the same test was performed with the ink amount of 7.1 g/m². This test was performed in the order of the ink amount of 7.4 g/m², 7.1 g/m², 6.8 g/m², and 6.5 g/m². The evaluation standard was as follows.
5: there was no gap even at an ink amount of 6.5 g/m².
4: there was a gap at an ink amount of 6.5 g/m².
3: there was a gap at an ink amount of 6.8 g/m².
2: there was a gap at an ink amount of 7.1 g/m².
1: there was a gap at an ink amount of 7.4 g/m².

The evaluation results are shown in Tables 1 to 3.

In Tables 1 to 3, "BzA + M2" indicates the total content (% by mass) of the benzyl acrylate and the specific difunctional (meth)acrylate.

"BzA/M2" indicates the mass ratio of the content of benzyl acrylate to the content of the specific difunctional (meth)acrylate.

"(BzA + M2)/polymerizable compound" indicates the total content of the benzyl acrylate and the specific difunctional (meth)acrylate with respect to the total content of all polymerizable compounds (excluding the silicone-based surfactant) contained in the ink.

**Table 1**

| | | Example 1 | Example 2 | Example 3 | Example 4 | Example 5 | Example 6 |
|---|---|---|---|---|---|---|---|
| BzA | | 64 | 64 | 64 | 64 | 57 | 57 |
| Specific difunctional (meth)acrylate | 3MPDDA | 20.8 | 4.8 | 4.8 | 4.8 | 20.8 | 20.8 |
| | HDDA | - | 16 | - | - | - | - |
| | NDDA | - | - | 16 | - | - | - |
| | PDDA | - | - | - | 16 | - | - |
| Other polymerizable compounds | IBOA | - | - | - | - | 7 | - |
| | LA | - | - | - | - | - | 7 |
| | EOTMPTA | 1.9 | 1.9 | 1.9 | 1.9 | 1.9 | 1.9 |
| Polymerization initiator | BAPO | 4 | 4 | 4 | 4 | 4 | 4 |
| | TPO-L | 4 | 4 | 4 | 4 | 4 | 4 |
| | Speedcure 7010 | 1.9 | 1.9 | 1.9 | 1.9 | 1.9 | 1.9 |
| Polymerization inhibitor | UV22 | 0.18 | 0.18 | 0.18 | 0.18 | 0.18 | 0.18 |
| Silicone-based surfactant | TEGORAD 2200N | 0.1 | 0.1 | 0.1 | 0.1 | 0.1 | 0.1 |
| Colorant | | 2.4 | 2.4 | 2.4 | 2.4 | 2.4 | 2.4 |
| Dispersant | | 0.72 | 0.72 | 0.72 | 0.72 | 0.72 | 0.72 |
| Surface tension (mN/m) | | 25 | 25 | 25 | 25 | 25 | 25 |
| BzA + M2 | | 84.8 | 84.8 | 84.8 | 84.8 | 77.8 | 77.8 |
| BzA/M2 | | 3.08 | 3.08 | 3.08 | 3.08 | 2.74 | 2.74 |
| (BzA + M2)/polymerizable compound | | 97.8 | 97.8 | 97.8 | 97.8 | 89.7 | 89.7 |
| Evaluation | Impact resistance | 5 | 5 | 5 | 4 | 4 | 5 |
| | Blocking resistance | 5 | 4 | 4 | 5 | 5 | 4 |
| | Adhesiveness | 5 | 5 | 5 | 4 | 4 | 4 |
| | Overcoat suitability | 5 | 5 | 5 | 5 | 5 | 5 |
| | Image quality | 5 | 5 | 5 | 5 | 5 | 5 |

**Table 2**

| | | Example 7 | Example 8 | Example 9 | Example 10 | Example 11 | Example 12 | Example 13 | Example 14 |
|---|---|---|---|---|---|---|---|---|---|
| BzA | | 71 | 68 | 55 | 45 | 64 | 64 | 64 | 64.1 |
| Specific difunctional (meth)acrylate | 3MPDDA | 13.8 | 16.8 | 29.8 | 39.8 | 20.8 | 20.8 | 20.8 | 20.8 |
| Other polymerizable compounds | EOTMPTA | 1.9 | 1.9 | 1.9 | 1.9 | 1.9 | 1.9 | 1.9 | 1.9 |
| Polymerization initiator | BAPO | 4 | 4 | 4 | 4 | 4 | 4 | 4 | 4 |
| | TPO-L | 4 | 4 | 4 | 4 | 4 | 4 | 4 | 4 |
| | Speedcure 7010 | 1.9 | 1.9 | 1.9 | 1.9 | 1.9 | 1.9 | 1.9 | 1.9 |
| Polymerization inhibitor | UV22 | 0.18 | 0.18 | 0.18 | 0.18 | 0.18 | 0.18 | 0.18 | 0.18 |
| Silicone-based surfactant | TEGORAD 2200N | 0.1 | 0.1 | 0.1 | 0.1 | - | - | - | - |
| | TEGORAD 2250 | - | - | - | - | 0.1 | - | - | - |
| | TEGORAD 2300 | - | - | - | - | - | 0.1 | - | - |
| | TEGORAD 2500 | - | - | - | - | - | - | 0.1 | - |
| Colorant | | 2.4 | 2.4 | 2.4 | 2.4 | 2.4 | 2.4 | 2.4 | 2.4 |
| Dispersant | | 0.72 | 0.72 | 0.72 | 0.72 | 0.72 | 0.72 | 0.72 | 0.72 |
| Surface tension (mN/m) | | 25 | 25 | 25 | 25 | 24 | 22 | 21 | 31 |
| BzA + M2 | | 84.8 | 84.8 | 84.8 | 84.8 | 84.8 | 84.8 | 84.8 | 84.9 |
| BzA/M2 | | 5.14 | 4.05 | 1.85 | 1.13 | 3.08 | 3.08 | 3.08 | 3.08 |
| (BzA + M2)/polymerizable compound | | 97.8 | 97.8 | 97.8 | 97.8 | 97.8 | 97.8 | 97.8 | 97.8 |
| Evaluation | Impact resistance | 5 | 5 | 4 | 3 | 5 | 5 | 5 | 5 |
| | Blocking resistance | 3 | 4 | 5 | 5 | 5 | 5 | 5 | 5 |
| | Adhesiveness | 5 | 5 | 4 | 3 | 5 | 5 | 5 | 5 |
| | Overcoat suitability | 5 | 5 | 5 | 5 | 4 | 3 | 3 | 5 |
| | Image quality | 5 | 5 | 5 | 5 | 5 | 5 | 5 | 3 |

**Table 3**

| | | Comparative Example 1 | Comparative Example 2 | Comparative Example 3 | Comparative Example 4 | Comparative Example 5 | Comparative Example 6 |
|---|---|---|---|---|---|---|---|
| BzA | | 64 | 64 | - | 32 | - | 32 |
| Specific difunctional (meth)acrylate | 3MPDDA | - | - | 20.8 | 20.8 | 20.8 | 20.8 |
| Other polymerizable compounds | DDDA | 20.8 | - | - | - | - | - |
| | BDDA | - | 20.8 | - | - | - | - |
| | IBOA | - | - | 64 | 32 | - | - |
| | LA | - | - | - | - | 64 | 32 |
| | EOTMPTA | 1.9 | 1.9 | 1.9 | 1.9 | 1.9 | 1.9 |
| Polymerization initiator | BAPO | 4 | 4 | 4 | 4 | 4 | 4 |
| | TPO-L | 4 | 4 | 4 | 4 | 4 | 4 |
| | Speedcure 7010 | 1.9 | 1.9 | 1.9 | 1.9 | 1.9 | 1.9 |
| Polymerization inhibitor | UV22 | 0.18 | 0.18 | 0.18 | 0.18 | 0.18 | 0.18 |
| Silicone-based surfactant | TEGORAD 2200N | 0.1 | 0.1 | 0.1 | 0.1 | 0.1 | 0.1 |
| Colorant | | 2.4 | 2.4 | 2.4 | 2.4 | 2.4 | 2.4 |
| Dispersant | | 0.72 | 0.72 | 0.72 | 0.72 | 0.72 | 0.72 |
| Surface tension (mN/m) | | 25 | 25 | 25 | 25 | 25 | 25 |
| BzA + M2 | | 64 | 64 | 20.8 | 52.8 | 20.8 | 52.8 |
| BzA/M2 | | - | - | - | 1.54 | - | 1.54 |
| (BzA + M2)/polymerizable compound | | 73.8 | 73.8 | 24.0 | 60.9 | 24.0 | 60.9 |
| Evaluation | Impact resistance | 5 | 2 | 1 | 2 | 5 | 5 |
| | Blocking resistance | 2 | 5 | 5 | 5 | 1 | 2 |
| | Adhesiveness | 5 | 3 | 1 | 2 | 1 | 2 |
| | Overcoat suitability | 5 | 5 | 5 | 5 | 5 | 5 |
| | Image quality | 5 | 5 | 5 | 5 | 5 | 5 |

As shown in Tables 1 and 2, in Examples 1 to 14, since the ink contained the specific difunctional (meth)acrylate, the benzyl (meth)acrylate, and the colorant, and the total content of the specific difunctional (meth)acrylate and the benzyl (meth)acrylate was 60% by mass or more with respect to the total amount of the ink, it was found that the obtained image had excellent impact resistance and blocking resistance.

On the other hand, in Comparative Example 1, it was found that the ink did not contain the specific difunctional (meth)acrylate, and thus the blocking resistance was deteriorated.

In Comparative Example 2, it was found that the ink did not contain the specific difunctional (meth)acrylate, and thus the impact resistance was deteriorated.

In Comparative Example 3, it was found that the ink did not contain the benzyl (meth)acrylate, and thus the impact resistance was deteriorated.

In Comparative Example 4, it was found that the total content of the specific difunctional (meth)acrylate and the benzyl (meth)acrylate was less than 60% by mass, and thus the impact resistance was deteriorated.

In Comparative Example 5, it was found that the ink did not contain the benzyl (meth)acrylate, and thus the blocking resistance was deteriorated.

In Comparative Example 6, it was found that the total content of the specific difunctional (meth)acrylate and the benzyl (meth)acrylate was less than 60% by mass, and thus the blocking resistance was deteriorated.

In Example 1, since the total content of the specific difunctional (meth)acrylate and the benzyl acrylate was 95% by mass or more with respect to the total amount of the polymerizable compounds, it was found that the impact resistance, the blocking resistance, and the adhesiveness were excellent as compared with Examples 5 and 6 and Comparative Examples.

In Example 1, since the mass ratio of the content of the benzyl acrylate to the content of the specific difunctional (meth)acrylate was 2 or more, it was found that the impact resistance and the adhesiveness were excellent as compared with Example 9.

In Example 1, since the mass ratio of the content of the benzyl acrylate to the content of the specific difunctional (meth)acrylate was 5 or less, it was found that the blocking resistance was excellent as compared with Example 7.

In Example 9, since the content of the benzyl acrylate was 50% by mass or more, it was found that the impact resistance and the adhesiveness were excellent as compared with Example 10.

In Example 11, it was found that the surface tension of the ink was 23 mN/m or more, and the overcoat suitability was excellent as compared with Example 12 and Example 13.

In Example 1, it was found that the surface tension of the ink was 26 mN/m or less, and the image quality was excellent as compared with Example 14.

In Example 11, since the silicone-based surfactant contained the polyether structure and the polysiloxane structure, and the mass ratio of the content of the polysiloxane structure to the content of the polyether structure was 0.6 or less, it was found that the overcoat suitability was excellent as compared with Example 12.

### Example 101

An ink C1 (cyan ink), an ink M1 (magenta ink), an ink Y1 (yellow ink), an ink K1 (black ink), and an ink W1 (white ink) were prepared.

As the ink C1, the cyan ink in Example 1 was used.

Preparation of inks M1, Y1, K1, and W1

First, a magenta pigment dispersion liquid, a yellow pigment dispersion liquid, a black pigment dispersion liquid, and a white pigment dispersion liquid were prepared.

The magenta pigment dispersion liquid, the yellow pigment dispersion liquid, the black pigment dispersion liquid, and the white pigment dispersion liquid were prepared by replacing, in the preparation of the cyan pigment dispersion liquid described above, the cyan pigment with a magenta pigment, a yellow pigment, a black pigment, and a white pigment, respectively.

Details of the magenta pigment, the yellow pigment, the black pigment, and the white pigment are as follows.
· Magenta pigment: C.I.Pigment RED 122, product name "TRM-33", manufactured by Dainichiseika Color & Chemicals Mfg.Co., Ltd.
· Yellow pigment: C.I.Pigment Yellow 185, product name "Paliotol Yellow D1155", manufactured by Sun Chemical (DIC Corporation)
· Black pigment: carbon black, product name "MOGUL E", manufactured by Cabot Corporation
· White pigment: titanium oxide, product name "KRONOS 2300", manufactured by KRONOS

Next, each of the prepared magenta pigment dispersion liquid, the prepared yellow pigment dispersion liquid, the prepared black pigment dispersion liquid, and the prepared white pigment dispersion liquid were mixed so that the content of each component was a content (% by mass) shown in Table 4. The mixture was stirred for 20 minutes at 25°C under the conditions of 5000 rpm using a mixer (product name "L4R", manufactured by Silverson), thereby obtaining inks M1, Y1, K1, and W1.

**Table 4**

| | | Example 101 | | | | |
|---|---|---|---|---|---|---|
| | | Ink C1 | Ink M1 | Ink Y1 | Ink K1 | Ink W1 |
| BzA | | 64 | 64 | 64 | 64 | 58 |
| Specific difunctional (meth)acrylate | 3MPDDA | 20.8 | 18 | 20 | 21.6 | 18 |
| Other polymerizable compounds | EOTMPTA | 1.9 | 1.9 | 1.9 | 1.9 | 1.9 |
| Polymerization initiator | BAPO | 4 | 4 | 4 | 4 | 4 |
| | TPO-L | 4 | 4 | 4 | 4 | 4 |
| | Speedcure 7010 | 1.9 | 1.9 | 1.9 | 1.9 | 1.9 |
| Polymerization inhibitor | UV22 | 0.18 | 0.25 | 0.2 | 0.16 | 0.4 |
| Silicone-based surfactant | TEGORAD 2200N | 0.1 | 0.1 | 0.1 | 0.1 | 0.1 |
| Colorant | Cyan pigment | 2.4 | - | - | - | - |
| | Magenta pigment | - | 4.5 | - | - | - |
| | Yellow pigment | - | - | 3 | - | - |
| | Black pigment | - | - | - | 1.8 | - |
| | White pigment | - | - | - | - | 9 |
| Dispersant | | 0.72 | 1.35 | 0.9 | 0.54 | 2.7 |
| Surface tension (mN/m) | | 25 | 25 | 25 | 25 | 25 |
| BzA + M2 | | 84.8 | 82 | 84 | 85.6 | 76 |
| BzA/M2 | | 3.08 | 3.56 | 3.20 | 2.96 | 3.22 |
| (BzA + M2)/polymerizable compound | | 97.8 | 97.7 | 97.8 | 97.8 | 97.6 |

### Image recording

An underlayer was formed on a substrate by the same method as in the underlayer forming step described above.

### Two-color multi-layer printing

Using an ink jet recording device including an ink jet head (product name "Samba G3L", manufactured by FUJIFILM Dimatix Inc.), the yellow ink (ink Y1) and the magenta ink (ink M1) were applied once. Specifically, as a first layer, the yellow ink was applied onto a rectangular region of 5 cm × 5 cm in the underlayer under the condition of a resolution of 1200 × 1200 (dpi), and a 100% solid image with an ink amount of 6.8 g/m² was recorded. Thereafter, an LED light source attached to the ink jet recording device was used to irradiate the ink with ultraviolet rays at an exposure amount of 20 mJ/cm². As the LED light source, an UV-LED irradiator (product name "G4B", manufactured by KYOCERA Corporation) with a peak wavelength of 385 nm was used. As a second layer, the magenta ink was applied onto the yellow image as the first layer, which was a rectangle having a size of 5 cm × 5 cm, under the condition of a resolution of 1200 × 1200 dpi, and a 100% solid image with an ink amount of 6.8 g/m² was recorded. Thereafter, the LED light source attached to the ink jet recording device was used to irradiate the ink with ultraviolet rays at an exposure amount of 800 mJ/cm², thereby obtaining an image recorded material.

### Three-color multi-layer printing

Using an ink jet recording device including an ink jet head (product name "Samba G3L", manufactured by FUJIFILM Dimatix Inc.), the yellow ink (ink Y1), the magenta ink (ink M1), and the cyan ink (ink C1) were applied once. An image recorded material was obtained by the same method as that in the above-described two-color multi-layer printing, except that, in the above-described two-color multi-layer printing, as a third layer, the cyan ink was applied on the magenta image as the second layer, which was a rectangle having a size of 5 cm × 5 cm, under the condition of a resolution of 1200 × 1200 dpi, and the ink amount of each ink was changed to 4.8 g/m².

### Four-color multi-layer printing

Using an ink jet recording device including an ink jet head (product name "Samba G3L", manufactured by FUJIFILM Dimatix Inc.), the yellow ink (ink Y1), the magenta ink (ink M1), the cyan ink (ink C1), and the black ink (ink K1) were applied once. An image recorded material was obtained by the same method as that in the above-described three-color multi-layer printing, except that, in the above-described three-color multi-layer printing, as a fourth layer, the black ink was applied on the cyan image as the third layer, which was a rectangle having a size of 5 cm × 5 cm, under the condition of a resolution of 1200 × 1200 dpi, and the ink amount of each ink was changed to 3.8 g/m².

### Five-color multi-layer printing

Using an ink jet recording device including an ink jet head (product name "Samba G3L", manufactured by FUJIFILM Dimatix Inc.), the white ink (W1), the yellow ink (ink Y1), the magenta ink (ink M1), and the cyan ink (ink C1) were applied once. Specifically, as a first layer, the white ink was applied onto a rectangular region of 5 cm × 5 cm in the underlayer under the condition of a resolution of 1200 × 1200 (dpi), and a 100% solid image with an ink amount of 6.8 g/m² was recorded. Thereafter, an LED light source attached to the ink jet recording device was used to irradiate the ink with ultraviolet rays at an exposure amount of 20 mJ/cm². As the LED light source, an UV-LED irradiator (product name "G4B", manufactured by KYOCERA Corporation) with a peak wavelength of 385 nm was used. An image recorded material was obtained by the same method as in the above-described four-color multi-layer printing, except that the yellow ink was applied onto the white image as the first layer, which was a rectangle having a size of 5 cm × 5 cm.

Using each of the obtained image recorded materials, the impact resistance, the blocking resistance, the adhesiveness, the overcoat suitability, and the image quality were evaluated by the same evaluation methods as in Example 1. All the evaluation results were "5".

Each of the obtained image recorded materials was processed using a press machine to form a square can (depth: 15 mm, diameter of corner portion: 6 mm). Each corner portion of the obtained square can was visually observed, and it was confirmed that there was no breakage.

## Claims

1. An active energy ray-curable ink jet ink, comprising:
a difunctional (meth)acrylate having a linear or branched alkylene group having 5 to 9 carbon atoms;
benzyl (meth)acrylate; and
a colorant,
wherein a total content of the difunctional (meth)acrylate and the benzyl (meth)acrylate is 60% by mass or more with respect to a total amount of the active energy ray-curable ink jet ink.

2. The active energy ray-curable ink jet ink according to claim 1,
wherein the total content of the difunctional (meth)acrylate and the benzyl (meth)acrylate is 95% by mass or more with respect to a total amount of polymerizable compounds.

3. The active energy ray-curable ink jet ink according to claim 1 or 2,
wherein a mass ratio of a content of the benzyl (meth)acrylate to a content of the difunctional (meth)acrylate is from 2.0 to 5.0.

4. The active energy ray-curable ink jet ink according to claim 1 or 2,
wherein a content of the benzyl (meth)acrylate is 50% by mass or more with respect to the total amount of the active energy ray-curable ink jet ink.

5. The active energy ray-curable ink jet ink according to claim 1 or 2,
wherein a surface tension is from 23 mN/m to 26 mN/m.

6. The active energy ray-curable ink jet ink according to claim 1 or 2, further comprising:
a silicone-based surfactant.

7. The active energy ray-curable ink jet ink according to claim 6, wherein:
the silicone-based surfactant contains a polyether structure and a polysiloxane structure, and
a mass ratio of a content of the polysiloxane structure to a content of the polyether structure is 0.6 or less.

8. An image recording method, comprising:
a step of applying the active energy ray-curable ink jet ink according to claim 1 or 2 onto a substrate by an inkjet recording method; and
a step of irradiating the applied active energy ray-curable ink jet ink with an active energy ray to record an image.

9. A manufacturing method of a molded body, comprising:
a step of applying the active energy ray-curable ink jet ink according to claim 1 or 2 onto a substrate by an inkjet recording method;
a step of irradiating the applied active energy ray-curable ink jet ink with an active energy ray to record an image; and
a step of molding the substrate on which the image has been recorded to manufacture a molded body.
